# EUROPEAN PATENT APPLICATION

(11) **EP 2 141 901 A1**
(43) Date of publication of application: **06.01.2010**
(21) Application number: 09163947.6
(22) Date of filing: 26.06.2009
(51) Int. Cl.: H04M 3/51, H04L 12/58

(54) **Instant messaging as a communication channel for a contact center**

(30) Priority: 30.06.2008 US 77081 P
(71) Applicant: FRANCE TELECOM, 75015 Paris (FR)
(72) Inventor: Lee, Dominic, SUNNYVALE, CA CA94086 (US); Sivasankaran, Vela, FOSTER CITY, CA CA 94404 (US); Krishnasamy, Santhana, FOSTER CITY, CA 94404 (US)

(57) **Abstract**

A system, method, processor and client device for an instant messaging (IM) system including an IM server and a user device operationally coupled to the IM server. The IM server provides an availability indication element to the user device indicating if any one of a plurality agents are available for an IM communication session. The user device enables selection of the availability indication element to initiate the IM communication session. The IM server routes the IM communication session to the available agent if the availability indication is selected by the user. The user device may provide a user interface including the availability indication. The user interface may display an IM buddy indication associated with the plurality of agents. The availability indication may be displayed in the user interface overlapping with the IM buddy indication.

## Description

### FIELD OF THE PRESENT SYSTEM:

The present system relates to a system, method and device for interacting with contact centers including contact center identities and controlled contact center interaction.

### BACKGROUND OF THE PRESENT SYSTEM:

Sellers of products and services have a need to provide support services for those products and/or services. This support service may make up a large part of the cost of sales for those products and services. Sellers are constantly looking at ways to reduce this cost yet have a need to support their customers. A contact center is one form of support service for a customer that provides a seller-sponsored structured organization for responding to customers inquiries. Contact centers provide real-time technical expertise to support the customers both before and after a purchase of the product and/or service. In a contact center, a customer is typically provided a one-on-one interaction with a technician to answer questions and resolve problems with a product and/or service. A problem exists in that contact centers are very expensive for the sellers to operate since each caller must be provided a technician to interact with. Further, while contact centers have an ability to provide high customer satisfaction, problems beyond the costs associated with running a contact center exist in that customers have experienced issues with poor contact center interactions, such as a not having the time to stay on the phone or make repeated phone calls to contact centers, not being able to get through to the right person, being put on hold for long periods of time, getting transferred to many agents, no one available to return a call, and not being able to figure out where to reach during non-business hours.

To reduce the costs of supporting customers and increase customer satisfaction with support services, sellers have utilized other modes of interacting with customers including web accessible resources, such as databases of previously solved issues typically termed Frequently Asked Questions (FAQs), that are accessible by customers interacting with a sellers sponsored website or third party sponsored website. Interactive Voice Response (IVR) systems may be provided wherein a computer is utilized to respond to voice-based inquiries typically resulting in a response of a voice-read FAQ to attempt at responding to a customer's inquiries. Email inquiries may be supported in either a structured or unstructured format. In a structured format wherein the customer typically selects categories of inquiries, an automated response may be provided similar to a FAQ-based response. In an unstructured email, a technician typically reviews details of the email and responds to the customer directly although not in real-time. On-line chat may be provided wherein a technician will interact with a customer via live text-based responses which may further provide for voice-based interaction should a user or technician desire the voice-based interaction.

Instant Messaging (IM) has recently been added to the arsenal of support services and provides some reduction in associated costs, yet the service is not well suited to customers desire to ensure availability of technicians. Interaction is supported by a web-based service wherein a user makes a request for an IM interaction that is directed to a technician for response, when one is available. However, a customer has no means of knowing if and when a technician is or will be available which can lead to dissatisfaction with the interaction when a response is delayed due to unavailability of a technician. When a customer has an issue with a product and/or service, their satisfaction with the product and/or service is directly related to how satisfied the customer is with the support service.

Each of the above support services provided by the seller has an associated cost for providing the support service. The cost of the support service typically increases as the closer the interaction of the customer with a technician. While each of the above support services may provide some reduction over costs associated with the support service, a need still exists to reduce costs of the support services further while increasing or at least without reducing a customer's satisfaction with the support service.

It is an object of the present system to overcome disadvantages and/or make improvements in the prior art.

### SUMMARY OF THE PRESENT SYSTEM:

The present system includes a system, method, processor and client device for an instant messaging (IM) system including an IM server and a user device operationally coupled to the IM server. The IM server provides an availability indication element to the user device indicating if any one of a plurality agents are available for an IM communication session. The user device enables selection of the availability indication element to initiate the IM communication session. The IM server routes the IM communication session to the available agent if the availability indication is selected by the user. The user device may provide a user interface including the availability indication. The user interface may display an IM buddy indication associated with the plurality of agents. The availability indication may be displayed in the user interface overlapping with the IM buddy indication.

The user device may provide a user interface that includes a communication mode selection portion including at least one interaction element. The at least one interaction element initiates a given type of interaction. The at least one interaction element may be one of a plurality interaction elements. The user interface may only provide a first one of the plurality of interaction elements prior to selection of the first one of the plurality of interaction elements and provide a second one of the plurality of interaction elements after selection of the first one of the plurality of interaction elements. The first one of the plurality of interaction elements may initiate an IM communication and the second one of the plurality of interaction elements may initiate a voice communication.

The IM server may utilize a predetermined routing scheme for routing the IM communication session to an agent. The IM server may include a language interpreter that examines contents of an IM communication request to identify an agent skill that is suited to the IM communication request. The routing scheme may be a skill-based routing scheme. The IM server may route the IM communication session to an agent that has the identified agent skill. The IM server may include a language interpreter, an information database and an automation portion. The language interpreter may examine contents of an IM communication request and determine if the IM communication request will be routed to the automation portion to respond to the IM communication request utilizing the information database or if the IM communication request will be routed to an agent based on the contents of the IM communication. In operation, the IM server associates a user IM identification with an identification of the user utilized for accessing the server independent of the IM system, such as an identification utilized for authentication to access a companies website or a user's account information.

### BRIEF DESCRIPTION OF THE DRAWINGS:

The invention is explained in further detail, and by way of example, with reference to the accompanying drawings wherein:
FIG. 1 shows a system, one or more portions of which may be utilized for operation in accordance with an embodiment of the present system;
FIG. 2 shows a system, one or more portions of which may be utilized for operation in accordance with an embodiment of the present system;
FIG. 3 shows an illustrative user interface that may be utilized for initiating an IM interaction, such as registration and other interactions with a system in accordance with an embodiment of the present system;
FIG. 4 shows an illustrative user interface that may be provided to a user after addition of a contact center buddy;
FIG. 5 shows an illustrative user interface that may be provided to a user in accordance with an embodiment of the present system; and
FIG. 6 shows a system of associating an IM ID with an account ID, such as a BANK ID, in accordance with an embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interaction between portions of the system, interfaces, techniques, etc. However, it will be apparent to those of ordinary skill in the art that other embodiments that depart from these details would still be understood to be within the scope of the appended claims. Moreover, for the purpose of clarity, detailed descriptions of well known devices, circuits, techniques and methods are omitted so as not to obscure the description of the present system. It should be expressly understood that the drawings are included for illustrative purposes and do not represent the scope of the present system. Further, while portions such as a system, method, device, etc. are illustratively described, each one of the system, method, device, etc. described should be understood to similarly apply to each other of the system, method, device, etc.

For purposes of simplifying a description of the present system, the term product and formatives thereof as utilized herein should be understood to relate to any type of product and/or service that may be provided to a customer. The term "company" and formatives thereof as utilized herein refer to any entity (e.g., corporation, partnership, individual, a seller, etc.) that desires to provide support for any purpose including in relation to a product provided by the company, in relation to support of a product, or in relation to providing information to a party for any other purpose. The terms "user", "customer", "customer" and formatives thereof as utilized herein refer to any party desiring to initiate interaction with an information/support service. The term "operatively coupled" and formatives thereof as utilized herein refer to a connection between devices or portions thereof that enables operation in accordance with the present system. For example, an operative coupling may include one or more of a wired connection and/or a wireless connection between two or more devices that enables a one and/or two-way communication path between the devices or portions thereof. In addition, an operable coupling may include a communication path through a wired and/or wireless network, such as a connection utilizing the Internet. The term contact center is utilized herein to describe a support/service center and as such, may be a contact center, call center, etc.

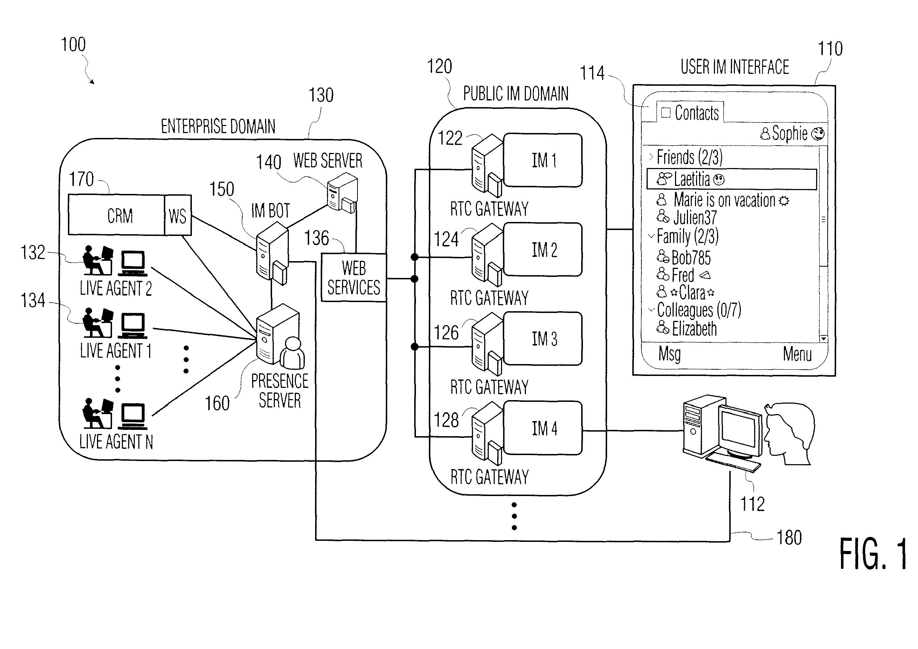

FIG. 1 shows a system 100, one or more portions of which may be utilized for operation in accordance with an embodiment of the present system. The present system 100 provides a mechanism for interaction between a support service and a user, such as a user initiated interaction or a support service initiated interaction, such as a call-back interaction. Although in the present system, portions shown appear as individual portions, it may be readily appreciated that each of these portions may be comprised of hardware and/or software portions including memory storage portions that store instructions for configuring a processor, such as illustratively shown as computer systems 112, 122, 124, 126, 128, 140, 150, 160, 132, 134, for operation in accordance with the present system.

Further, the present system 100 is illustratively shown as discrete operating portions, as is readily appreciated, these discrete operating portions are merely provided to facilitate the following discussion and should not be understood to require corresponding physically discrete portions of the system. For example, as is readily appreciated, the portions of the system 100 may be readily implemented as one or more programming portions that configure the system 100 and portions thereof for operation as described herein. In one embodiment of the present system, the processors may be operationally coupled to a memory, such as available to the processors as represented by the computer systems 112, 122, 124, 126, 128, 140, 150, 160, 132, 134. The one or more memories may be any type of device for storing application data as well as other data related to the described operation. The application data and other data are received by the processors for configuring the processors to perform operation acts in accordance with the present system. Accordingly, the present system may be embodied as one or more computer software programs, such one or more programs containing modules corresponding to one or more of the individual steps, acts and/or portions described and/or envisioned by the present system. The processors may operate utilizing a program portion, multiple program segments, and/or may be a hardware device utilizing a dedicated or multi-purpose integrated circuit. Accordingly, the system 100 for example may be readily implemented on one or more properly configured computer systems.

The system 100 for illustration is shown as broken into three operating portions including a user portion 110, a public Instant Messaging (IM) Domain 120 and an enterprise domain 130, all shown as being operably coupled together through the public IM domain 120. In an alternate embodiment, interaction between the enterprise domain 130 and the user portion 110 may be supported by other system portions, such as a plain old telephone service (POTS system) alone or in support of the public IM domain 120 and/or other systems. The user portion 110 illustratively includes the computer system 112 (e.g., processor, memory, etc.) although as may be readily appreciated, any device that may support an IM interface, such as the user IM interface 114, may be readily utilized for interaction with the system 100. For example, the computer system 112 may be a portion of a mobile telephone handset, personal digital assistant or any other device that supports IM and some form of an IM interface 114, be it visually or orally rendered. The system 100 may also support other modes of communication between the computer system 112 and the enterprise domain 130, such as voice, video, etc., as illustratively shown by the operable connection 180 between the computer system 112 and the IM bot 150.

The IM interface 114 may be any type of interface typically provided by an IM client application running on the computer system 112. Advantageously, the user need not install any additional IM client software to have unified communication with the enterprise contact center. Further, in one embodiment in accordance with the present system, portions of the IM interface 114 may be customized either locally by the IM client application, or by the enterprise domain 130 operating through the public IM domain 120, to provide portions for interaction with the system 100. The public IM domain 120 is intended to include any IM client and domain portions thereof that are available for the user's interaction. As IM systems and program portions are readily understood by a person of ordinary skill in the art, details of the IM system and portions thereof will not be discussed herein to simplify the discussion.

The enterprise domain 130 is illustratively shown as including web services 136, web server 140, an IM automation server (IM bot 150), customer relationship management (CRM) 170, a presence server 160, and live agents and support processors/computer systems indicated as agents 132, 134 (live agent 1, live agent 2, ..., live agent N). As illustratively shown, the web server 140 via the web services 136 interacts with computer system 112 (e.g., the user device) through the public IM domain 120. The presence server 160 interacts with the web server 140 via the IM bot 150.

The CRM 170 provides a system for supporting two-way exchanges with users so that the company has information about the user to support a user interaction. For example, the CRM 170 may include program portions for retrieving/storing a user profile including user identifying and authentication information, information on past interactions with the enterprise domain 130 and/or other interactions of the user with the company. The user profile may include information on company products that where purchased by the user. The CRM 170 assists the company to understand, as well as anticipate, the needs of the users during an interaction. As a CRM function is known in the art, further discussion related to the CRM 170 will be limited to portions that are relevant for the following discussion.

The IM bot 150 is provided for user interaction with the present system and may support automation processes such as natural language processing (NLP) and/or may provide an artificial intelligence to facilitate user interaction with the contact center without a need for interaction with an agent. When a suitable inquiry is provided by the user, the contact center through the IM bot 150 may provide an automated answer, for example through an IM to the user. From the user's perspective the answer may be provided in a form that does not distinguish whether the response came from the IM bot 150 or from one of the live agents. For example, an IM to the company making an inquiry into a balance of a bank account of a user may first be authenticated through interaction with the CRM 170, after which, the IM bot 150 may parse the IM to determine that no interaction with an agent is required to provide an IM response. In such a case, the IM bot 150 may provide an IM response, including the requested account balance, to the user utilizing an IM account identified by the CRM 170 as belonging to the user. Further discussion of the association of an IM identity with user account credentials is discussed herein. In other embodiments, responses that are provided directly by the IM bot 150 without agent interaction may be indicated as originating from an automation system in the IM to the user, such as in a heading portion. In a case wherein an agent response is requested by the user or determined to be desirable by the IM bot 150, such as when the IM bot 150 can not determine a suitable automated response, the presence server 160, in accordance with the present system, may direct a user IM to one of the available live agents, such as one of live agent 132, 134.

In accordance with the present system, advantageously, through use of the presence server 160, the user through interaction with the user IM interface 114, is provided with an indication whether any live agent is available for IM without a need to identify any particular one of the agents. The present system utilizes a unique mechanism to aggregate agents into a single representation unit shown as a "contact center buddy" in a user's IM buddy list (e.g., as indicated in the user IM interface 114). In accordance with the present system, the group presence contact center buddy may indicate the availability of agents at the contact center. The buddy's status is provided in the user IM interface 114, by the presence server 160, similar as on-line status is typically provided in an IM interface with the exception that the contact center buddy represents an aggregated group of agents at the contact center. This group presence indication of the contact center buddy is obtained by aggregating the status information from a pool of agents through the presence server 160.

In one embodiment of the present system, if one or more agents in the agent pool are available, the contact center buddy status may be shown as "Available" (e.g., a green indication) to indicate that one or more agents (e.g., any contact center agent) are available for IM communications. In a case wherein no agent in the agent pool is available, the contact center buddy status may be shown as "Unavailable" (e.g., a red indication) to indicate that no agent is available. As soon as any available agent in the agent pool enters into an IM exchange, this agent becomes "Unavailable" which if this is the last agent available, will change the status of the contact center buddy to "Unavailable". In a case wherein one or more other agents are still available for IM communications, the unavailability of a given agent will not affect the Available status indication of the contact center buddy.

Other contact center buddy rules may include that if only one agent is available, that agent will receive any IM that is directed to an agent by the user and/or the IM bot. However, if there are two or more agents in the agent pool available, the next agent to receive a user IM may be determined by the presence server based other routing schemes such as queue-based routing, skill-based routing, etc. For example, in a system that utilizes skill-based routing, an IM may be analyzed by the IM bot 150 and/or the presence server 160 to determine what agent skill is suitable for responding to the IM and a preferred routing may be to an agent that has the suitable skill, if one such an agent is available. In a case wherein such an agent is not available, a next most suitable skill may be determined and the IM may be routed appropriately to an agent with the next most suitable skill or the routing may default to another routing scheme such as a queue-based routing scheme.

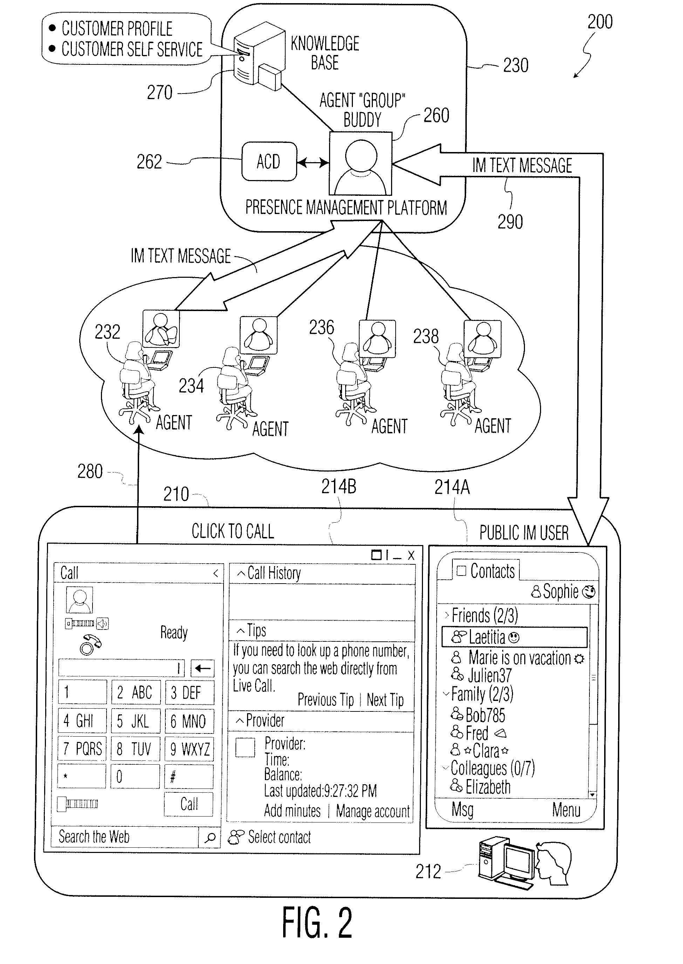

FIG. 2 shows a system 200, one or more portions of which may be utilized for operation in accordance with an embodiment of the present system. The system 200 includes a user portion 210 and an enterprise domain 230, shown as being operably coupled together through an IM coupling 290 and a coupling 280. The coupling 280 is depicted to illustrate a voice/video/data enabled coupling that may be provided by any suitable coupling. The coupling 280 may be utilized to support one or more of a voice/video/data interaction between the user portion 110 and the enterprise domain 230. The IM coupling 290 is intended to depict any coupling that may be suitably utilized for supporting an IM interaction between the user portion 110 and the enterprise domain 230. As may be readily appreciated, the IM coupling 290 and the coupling 280 may be provided by a single common coupling, such as a coupling through the Internet. As illustrated, the user portion 210 is supported by a computer system 212 which provides an IM interface 214A, for an IM interaction, and a calling interface 214B, for an interaction involving one or more of voice/video/data. In another embodiment, the user interface 214A and 214B may be combined into a single user interface portion.

The system 200 is simplified from the system 100 in that interaction between the user portion 210 and the enterprise domain 230 is supported by a presence management platform 260 and an automatic call distribution system (ACD) 262 that together may operate utilizing IM presence rules similar as described above regarding FIG. 1. The presence management platform 260 utilizes the ACD 262 to implement the presence rules including routing of interactions to an agent. The presence management platform 260 utilizes a knowledge base 270 to implement authentication of users interacting with the enterprise domain as well as to support automated responses to an interaction. As such, the knowledge base 270 may include a user's profile as well as a database of frequently asked questions (FAQ's) and other data that may be provided in response to an interaction. The presence management platform 260 provides an indication of a contact center buddy "presence" to the user through use of the IM coupling 290, similar as a typical IM presence indication with the exception that the contact center buddy presence indication is an indication whether or not any agents of the company are available for interaction.

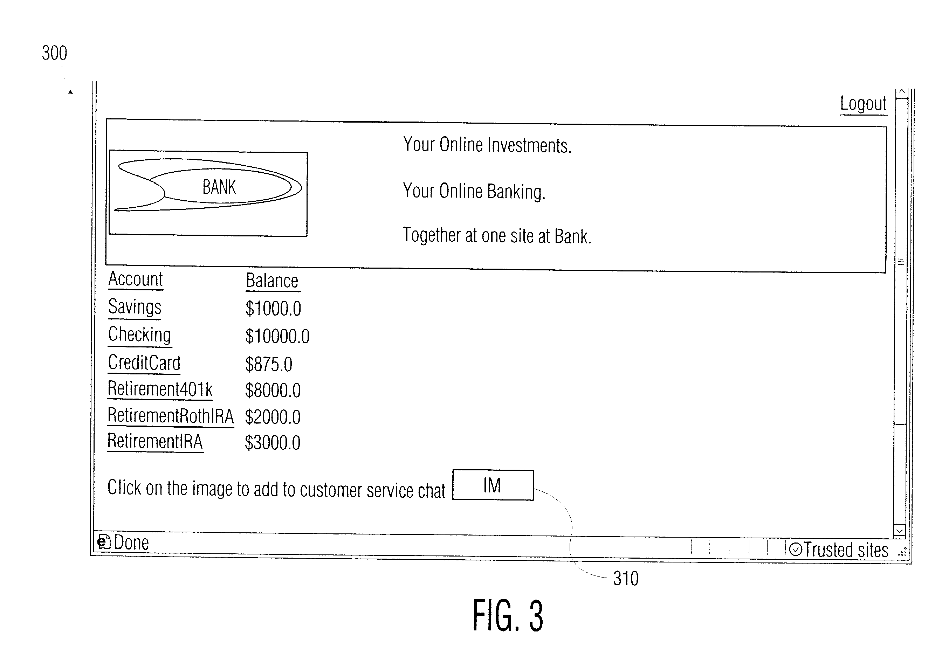

FIGs. 3-5 illustrate a user interface that may be utilized for interaction with a company's contact center in accordance with an embodiment of the present system.

FIG. 3 shows an illustrative user interface 300 that may be utilized for initiating an IM interaction, such as registration and other interactions with a system in accordance with an embodiment of the present system. In FIG. 3, the user interface 300 is typical as may be provided in interaction with a company such as a bank (hereinafter "Bank"), however, unlike prior systems, the user is provided a link 310 to initiate an interaction with a Bank contact center in accordance with the present system. Selection of the link 310 enables the user to register with and add a Bank contact center as a buddy in an IM client that may reside on a user device, such as a computer system, mobile telephone, etc. In accordance with the present system, selection of the link 310 begins a process of associating an account that the user maintains with the Bank, with a user's IM identification (IM ID).

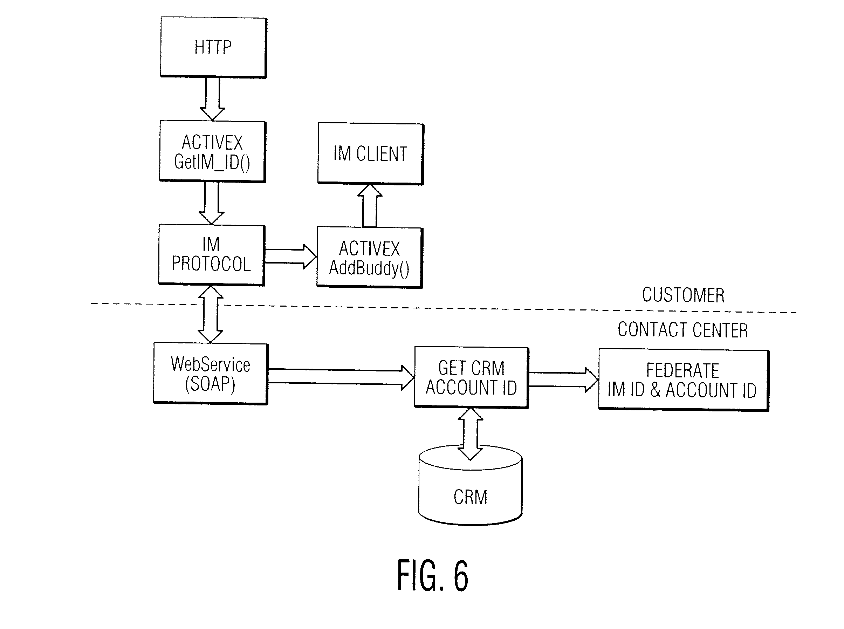

FIG. 6 shows a system of associating an IM ID with an account ID, such as a BANK ID, in accordance with an embodiment of the present system. In operation, the user may initiate association of an IM ID with the Bank ID in many different ways. For example, the user may select a link from a webpage depicted in a browser window, such as the link 310 shown in FIG. 3. In accordance with another embodiment of the present system, the user may initiate an association by selecting to add the contact center buddy in an IM client. Other systems of initiating the association would readily occur to a person of ordinary skill in the art and are intended to be encompassed by the claims that follow. In the exemplary embodiment shown in FIG. and regardless of how the association is initiated, a hypertext transfer protocol request (HTTP) is initiated through an ActiveX component, to retrieve the IM ID from an IM domain and/or client. Naturally an authentication process may be required for performing this act, although the authentication process is not shown in the figure. In one embodiment, the authentication process may not be required, such as when the user has already provided authentication, such as when the user logs into an IM client. The ActiveX component, utilizing an Internet Protocol (IP), may invoke a SOAP Web Service to retrieve a user's account ID (e.g., Bank ID) from a Contact Center's CRM system. The SOAP web service may also perform the association acts of the user's IM ID and Bank ID in the Contact Center, for example, storing the association information in a CRM database. The SOAP web service may also return, for example using an IM protocol, to invoke an AddBuddy() ActiveX function to add the contact center buddy to the user's IM client. In accordance with this embodiment, the AddBuddy() ActiveX function may add the Contact Center "Buddy" to user's IM Client.

Returning to FIG. 3, the IM ID selected to be associated with the Bank ID may be the same or different than the IM ID that the user utilizes for any other interaction with the IM client, such as may be utilized for IM communications with a friend, associate, etc. In accordance with the embodiment shown in FIG. 3, by selection of the link 310 within the user interface 300, the Bank associates an identity between the user's banking credentials (e.g., login password, bank account, etc.) and the user IM ID. An authentication process similar to utilized for establishing the user's banking credentials may be utilized to confirm that the user is authorized to associate the user's banking credentials with the user IM ID.

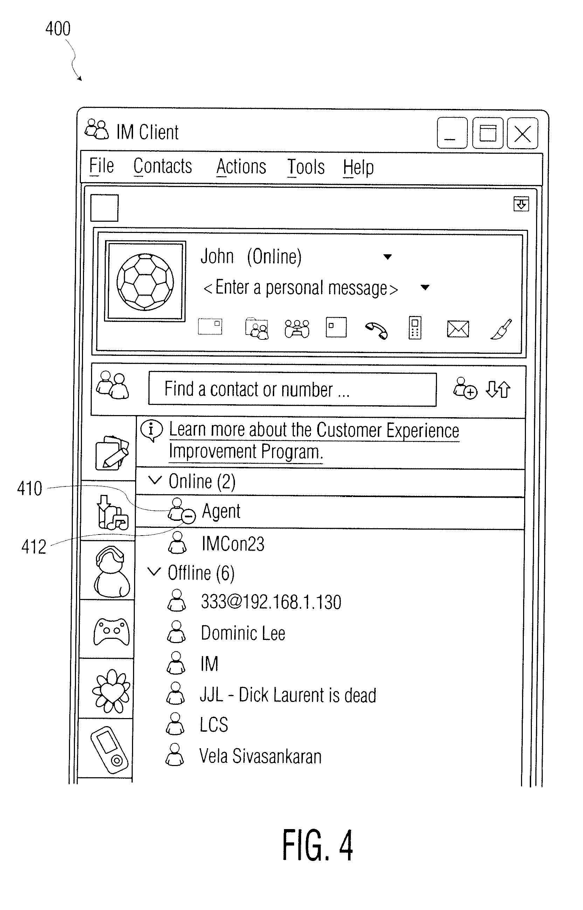

FIG. 4 shows an illustrative user interface 400 that may be provided to a user after addition of a contact center buddy 410. In accordance with the present system, the contact center buddy 410 provides an indication 412 indicating whether or not a contact center agent is available for IM communications. The contact center buddy 410 may be depicted in close association (e.g., near or overlapping) with the indication 412. In a case wherein there are no agents available from the contact center to respond to an IM, the indication 412 may show the contact center buddy 410 as unavailable (e.g., a red circle indication, a cross through the agent indication, etc.). In accordance with an embodiment of the present system, the contact center buddy 410 represents a collaborative group presence of all the contact center agents for one or more (e.g., all) provided channels of communication like voice, IM chat, video, etc., thereby providing a unified indication of communication available for the contact center. When one or more agents become available, the indication 412 will change (e.g., an absence of the unavailable indication, a change to a green circle, the indication turning green, etc.) to indicate that one or more agents are available for an interaction. In this way, the Bank contact center buddy will appear in the customer IM client indicating an online/available status. Once one or more agents become available, the user may then proceed to do unified communication with the Bank contact center. In one embodiment, a further indication may be provided showing that a live agent is not available yet self service interaction is available. The further indication may be provided in addition to or in place of the indication 412.

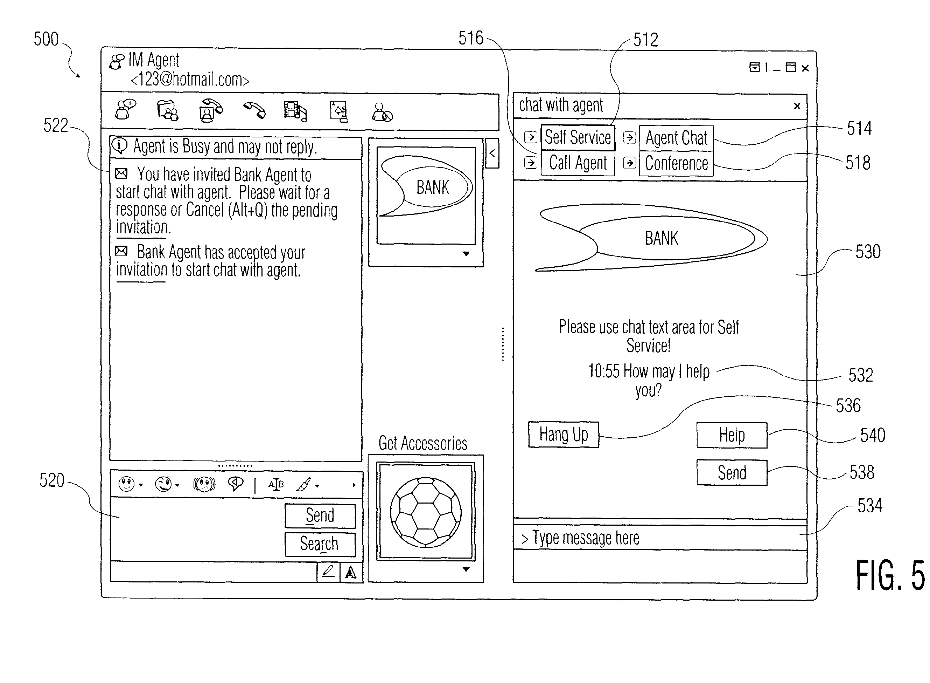

FIG. 5 shows an illustrative user interface 500 that may be provided to a user in accordance with an embodiment of the present system. In accordance with an embodiment of the present system, the IM client may be customized, for example at the time of contact center registration, to enable agent interaction without a necessity of installing any additional software on the user's device. In this embodiment, a Bank server (e.g., web server 140 of FIG. 1) may push the interaction elements, such as self service 510, agent chat 512, call agent 514 and conference 516 to the user's IM client to incorporate all the agent interaction methodologies into the user's IM client and corresponding IM interface. Each of the interaction elements may be manipulated by the user to initiate a corresponding interaction. Self service 512 may be depressed through operation of a user pointing device as may be readily appreciated by a person of ordinary skill in the art, to initiate a self service interaction, such as a balance inquiry, etc. In accordance with a further embodiment of the present system, entrance of an inquiry into a self service area 520 may automatically initiate a self service interaction without further manipulation within the user interface 500. Responses to a self service interaction may be provided in a self service response area 522.

In a yet further embodiment, all IM may be initially analyzed by an IM bot, such as the IM bot 150 shown in FIG. 1, utilizing a natural language processor for a determination whether the IM requires interaction with a live agent. In a case wherein the interaction may be responded to without an agent's interaction, the IM bot may respond to the user's IM interaction in place of initiating an IM session with an agent.

The user interface 500 also provides an agent chat area 530 for IM interactions with an agent. The IM chat area includes a transcript area 532, wherein a scrolling transcript of an IM interaction may be provided. An input area 534 may be provided for entering IM text. A hang up element 536 may be provided for terminating an IM session. A send element 538 may be provided for forwarding to the agent, IM text that is in the input area 534.

In accordance with an embodiment of the present system, the call agent 516 interaction element and/or the conference 518 interaction element may operate, subsequent to an IM session between the user and an agent, as an escalation into a voice call between the user and the same agent previously interacting in the IM session. In this embodiment, a group presence server at the Bank may operate to escalate the interaction from the IM session to a voice call with the same agent even if the collaborative presence status shows that no agent is available. This feature of enabling interaction to continue between a given user and agent even if different modes of interaction (e.g., chat, voice, video, etc.) are desired, allows enhancements to the collaborative presence of the present system to facilitate unified communication to suit real-world scenarios.

In accordance with a further embodiment, one or more of the interaction elements may not be provided to the user until a different interaction element is selected and the different interaction is already initiated. For example, in one embodiment, the user interface 500 may initially only provide the self service 512 and agent chat 514 interaction elements without providing the call agent 516 and conference 518 interaction elements. Once an IM session is initiated between an agent and the user, the Bank web server may push a further interaction element, such as the call agent 516 interaction element, to the user interface 500. In this way, the user may be discouraged from initiating a voice call immediately which as discussed above, has higher associated costs for the Bank. However, in a case where the IM session is not sufficient to respond to an inquiry, an option of a voice call is provided after the initiated IM session so as to provide a further mode of communication to respond to an inquiry. In accordance with an embodiment, further interaction elements may be provided, such as a video conference, after a voice call is initiated. In a further embodiment, in a case wherein the call agent 516 interaction element is selected before an IM session is initiated, the system (e.g., the system 200 shown in FIG. 2) may provide an automated voice response system to the user through the presence management system and knowledge base, without providing access to an agent. In this way, a smooth escalation of the mode of communication may be automatically provided by the present system such that multiple modes of communication are available to respond to a inquiry, yet only a restricted few number of modes of communication are initially available to discourage a user from immediately requesting a more expensive (at least to the contact center operator) mode of communication.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended spirit and scope of the present system as set forth in the claims that follow. In addition, the section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. An instant messaging (IM) system (100) comprising:
an IM server (150); and
a user device (110) operationally coupled to the IM server, wherein the IM server is configured to provide an availability indication element to the user device indicating if any one of a plurality agents (112) are available for an IM communication session, wherein the user device is configured to enable selection of the availability indication element to initiate the IM communication session, and wherein the IM server is configured to route the IM communication session to the available agent if the availability indication is selected by the user.

2. The IM system of claim 1, wherein the user device is configured to provide a user interface (114) including the availability indication, wherein the user interface is configured to display an IM buddy indication associated with the plurality of agents and wherein the availability indication is displayed in the user interface overlapping with the IM buddy indication.

3. The IM system of claim 1, wherein the user device is configured to provide a user interface, wherein the user interface includes a communication mode selection portion including at least one interaction element, wherein the at least one interaction element is configured to initiate a given type of interaction.

4. The IM system of claim 3, wherein the at least one interaction element is a plurality interaction elements and wherein the user interface is configured to only provide a first one of the plurality of interaction elements prior to selection of the first one of the plurality of interaction elements and wherein the user interface is configured to provide a second one of the plurality of interaction elements after selection of the first one of the plurality of interaction elements.

5. The IM system of claim 1, wherein the IM server includes a language interpreter, an information database and an automation portion, wherein the language interpreter is configured to examine contents of an IM communication request and determine if the IM communication request will be routed to the automation portion to respond to the IM communication request utilizing the information database or if the IM communication request will be routed to an agent based on the contents of the IM communication.

6. The IM system of claim 1, wherein the IM server is configured to associate a user IM identification with an identification of the user utilized for accessing the server independent of the IM system.

7. A method of operating an instant messaging (IM) system (100), the method comprising acts of:
providing an availability indication element to a user device (110) indicating if any one of a plurality agents (112) are available for an IM communication session;
enabling selection of the availability indication element to initiate the IM communication session; and
routing the IM communication session to the available agent if the availability indication is selected by the user.

8. The method of claim 7, comprising an act of displaying a user interface (114) including the availability indication, wherein the user interface is configured to display an IM buddy indication associated with the plurality of agents, and wherein the availability indication is displayed in the user interface overlapping with the IM buddy indication.

9. The method of claim 7, comprising an act of providing a user interface, wherein the user interface includes a communication mode selection portion including at least one interaction element, wherein the at least one interaction element is configured to initiate a given type of interaction.

10. The method of claim 9, wherein the at least one interaction element is a plurality interaction elements, the method comprising acts of:
providing only a first one of the plurality of interaction elements prior to selection of the first one of the plurality of interaction elements; and
providing a second one of the plurality of interaction elements after selection of the first one of the plurality of interaction elements.

11. The method of claim 7, comprising an act of examining contents of an IM communication request to determine if the IM communication request will be routed to an automation program portion to respond to the IM communication request or if the IM communication request will be routed to an agent based on the contents of the IM communication

12. The method of claim 7, comprising an act of associating a user IM identification with an identification of the user utilized for accessing a system that is independent of the IM system.

13. A computer readable carrier including computer program instructions that cause a computer to implement a method of operating an instant messaging (IM) system according to claims 7 to 12
